# EUROPÄISCHE PATENTSCHRIFT

(11) **EP 3 455 060 B1**
(45) Veröffentlichungstag und Bekanntmachung des Hinweises auf die Patenterteilung: **03.05.2023**
(21) Anmeldenummer: 17707540.5
(22) Anmeldetag: 27.02.2017
(51) Int. Cl.: B29C 70/44, B29C 70/22, B29L 23/00, B29K 23/00, B29K 67/00, B29K 77/00, B29K 307/04, B29K 309/08

(54) **VERFAHREN ZUR HERSTELLUNG EINES LADELUFTROHRES**
METHOD FOR PRODUCING A CHARGE AIR PIPE
PROCÉDÉ DE FABRICATION D'UNE TUBULURE D'AIR DE SURALIMENTATION

(30) Priorität: 11.05.2016 DE 102016208116
(43) Veröffentlichungstag der Anmeldung: 20.03.2019
(73) Patentinhaber: ContiTech MGW GmbH, 34346 Hann. Münden (DE)
(72) Erfinder: BORNEMANN, Axel, 37191 Katlenburg-Lindau (DE); JÜNEMANN, Jens, 37191 Katlenburg-Lindau (DE); HÖER, Martin, 30453 Hannover (DE)
(74) Vertreter: Continental Corporation
(86) Internationale Anmeldenummer: PCT/EP2017/054434
(87) Internationale Veröffentlichungsnummer: WO 2017/194217

(56) Entgegenhaltungen:
- EP-A1- 1 118 444
- EP-A2- 0 185 460
- WO-A1-2010/111700
- FR-A1- 2 584 018

## Beschreibung

Die Erfindung betrifft ein Verfahren zur Herstellung eines Ladeluftrohres aus Kunststoff.

Für die Sicherstellung der Funktionalität des Ladeluftsystems für Verbrennungsmotoren werden starre und flexible Leitungen zur Verbindung zwischen Lader, Resonator, Ladeluftkühler und Motoreinlass eingesetzt. Aufgrund von kompakter Motorenbauweise haben diese Bauteile in der Regel eine sehr komplexe Geometrie, das heißt unter anderem einen oder mehrere Krümmungswinkel.

Die geometrischen Anforderungen (Rohrinnendurchmesser) ergeben sich aus der zu transportierenden Luftmenge und die Länge der Rohre aus den konstruktiven Begebenheiten des Motorraums. Unter Berücksichtigung der thermomechanischen und chemischen Beanspruchungen werden die starren Leitungen nach heutigem Stand der Technik vorrangig aus thermoplastischen Kunststoffen mit oder ohne Faserverstärkung im Blasformverfahren sowie Spritzgussverfahren hergestellt. Typische Werkstoffe, welche für die Bauteile zum Einsatz kommen, sind Commodity Thermoplastics, z.B. Polypropylen (PP), Engineering Thermoplastics, z.B. Polyamid (PA), High Temperature Thermoplastics, z.B. Polyphenylensulfid (PPS) oder thermoplastische Elastomere (TPE).

In der DE 10 2000 14 110 747 ist beispielsweise ein Rohr offenbart, welches ohne Verstärkungsfasern blasgeformt ist.

Ein Nachteil des Blasformverfahrens sind ein hoher Anteil technologisch bedingter Abfall, eine undefinierte Oberfläche im Inneren des Rohres sowie eine ungleichmäßige Wandstärke über den Bauteilquerschnitt, vorrangig im Bereich von Krümmungswinkeln. In Bereichen von Radien ergeben sich am Innendurchmesser eine Masseanhäufung sowie am Außendurchmesser eine Wanddickenreduzierung. Um die thermomechanischen Anforderungen zu erfüllen, muss eine Mindestwandstärke in allen Bereichen des Ladeluftrohres gewährleistet werden, was dazu führt, dass ein sehr hoher Materialeinsatz notwendig ist und somit die Wandstärke in geraden Abschnitten des Ladeluftrohres verfahrensbedingt zum Teil über der geforderten Mindestwandstärke liegt.

Um die Nachteile der Blasformtechnik zu vermeiden, sind auch Ladeluftrohre bekannt, deren Wandung aus faserverstärkten Kunststoffen bestehen. In der DE 10 2012 208 363 ist ein Ladeluftrohr vorgeschlagen, welches einen Vorformling als Extrusionsbauteil aufweist. Die Verstärkungsmaterialien sind dabei jedoch erst nach der Erzeugung des Vorformlings aufbringbar.

Diese Lösung erfordert einen mehrstufigen Herstellprozess. Außerdem ist bei der Extrusion die Auswahl der zur Verfügung stehenden Fasern, insbesondere in der Faserlänge beschränkt.

Die Dokumente EP 0185460 A2, EP 1118444 A1, WO 2010/111700 A1 und FR 2584018 A1 offenbaren jeweils ein Verfahren zur Verfahren zur Herstellung eines Ladeluftrohres aus Kunststoff, bei dem
- unter Verwendung von zumindest teilweise thermoplastisch verformbarer Endlosfasern eine Rohrkontur auf einem Kern geflochten wird,
- das Fasergeflecht anschließend in ein beheizbares Formwerkzeug eingelegt wird, wobei im Inneren des Fasergeflechts ein Stützkörper, z. B. einen Liner oder eine Blase, platziert wird,
- das Formwerkzeug zum Aufschmelzen der thermoplastischen Endlosfasern beheizt wird,
- das Formwerkzeug unter Aufbringung eines Druckes im Formwerkzeug abgekühlt wird, und
- das Bauteil unter Entfernung des Stützkörpers aus der Form entnommen wird.

Nachteilig an diesen Verfahren sind die vielen aufwendigen Arbeitsschritte, die zum Teil manuell ausgeführt werden müssen, wie z. B. das Einsetzen des Fasergeflechts in das Formwerkzeug sowie das Platzieren des Stützkörpers in dem Fasergeflecht.

Der Erfindung liegt die Aufgabe zugrunde, ein Verfahren zur Herstellung von Ladeluftrohren zu schaffen, mittels dessen Ladeluftrohre aus endlosfaserverstärkten Kunststoffen mit gleichmäßiger Wandstärke und hochpräziser Innenkontur herstellbar sind.

Diese Aufgabe wird dadurch gelöst, dass das Verfahren folgende Arbeitsschritte aufweist, nämlich
A) Flechten einer Rohrkontur auf einem Kern unter Verwendung von Endlosfasern, wobei mindestens ein Teil der Endlosfasern aus thermoplastisch verformbaren Material besteht,
B) Einlegen des Fasergeflechtes zusammen mit dem Kern in ein Formwerkzeug,
C) beheizen des Formwerkzeugs derart, dass die thermoplastischen Endlosfasern aufschmelzen,
D) Abkühlen des Formwerkzeugs unter Aufbringung eines Druckes im Formwerkzeug,
E) Entnehmen des Bauteils aus der Form und Entfernung des Kerns.

Bei diesem Verfahren entsteht ein Ladeluftrohr mit einer verstärkten thermoplastischen Matrix als Wand. Vorteile einer thermoplastischen Matrix sind ein hoher verarbeitungstechnischer Bekanntheitsgrad sowie die Möglichkeit, zusätzliche Verbindungs- und Funktionselemente, z.B. Halter, aus thermoplastischem Kunststoff u.a. mittels Schweißverfahren mit dem Bauteil zu verbinden.

In einer Weiterbildung der Erfindung ist der Kern kompressibel ausgebildet.

Die Kompressibilität des Kerns hat den Vorteil, dass auch bei in gewissen Grenzen komplexeren Rohrformen der Kern noch aus dem fertig ausgehärteten Rohr entfernbar ist.

In einer Weiterbildung der Erfindung erfolgt das Flechten durch eine automatische Rundflechtmaschine.

Durch den Einsatz automatisierter Maschinen wird die Herstellung der Rohre kostenmäßig günstiger.

In einer Weiterbildung der Erfindung sind die Endlosfasern als Hybridgarn ausgebildet.

In einer Weiterbildung der Erfindung weist das Hybridgarn anorganische Verstärkungsfasern und thermoplastische Kunststofffasern auf.

In einer Weiterbildung der Erfindung sind die anorganischen Verstärkungsfasern als Glasfasern ausgebildet.

In einer Weiterbildung der Erfindung weist das Hybridgarn organische Verstärkungsfasern und thermoplastische Kunststofffasern auf.

In einer Weiterbildung der Erfindung sind die organischen Verstärkungsfasern als Carbonfasern ausgebildet.

In einer Weiterbildung der Erfindung sind die thermoplastischen Kunststofffasern als Polypropylenfasern ausgebildet.

In einer Weiterbildung der Erfindung sind die thermoplastischen Kunststofffasern als Polyamidfasern ausgebildet.

In einer Weiterbildung der Erfindung sind die thermoplastischen Kunststofffasern als Polyesterfasern ausgebildet.

Durch die Möglichkeit, eine große Vielfalt an Fasern zum Flechten einzusetzen, ist das Verfahren an ein breites Spektrum an Einsatzfällen anpassbar.

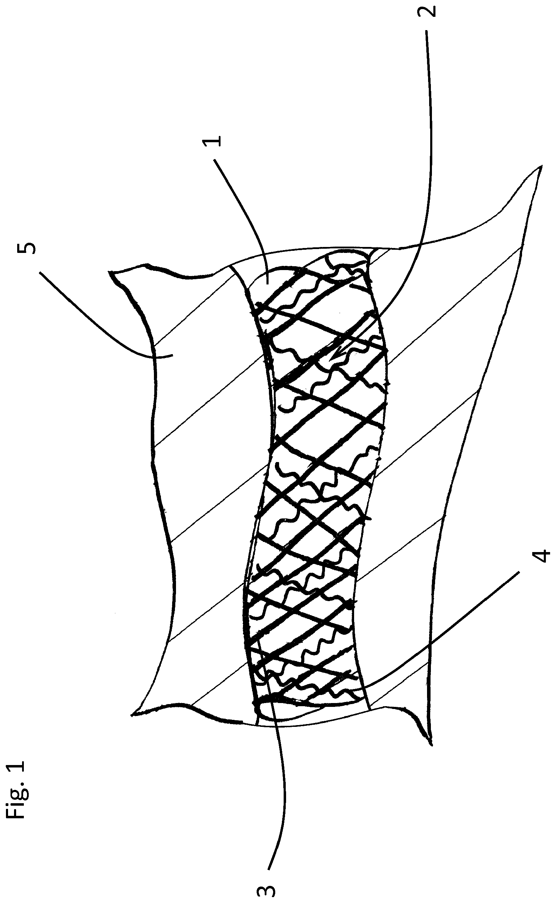

Anhand der Zeichnung wird nachstehend ein Beispiel der Erfindung näher erläutert. Die Figur 1 zeigt die Arbeitsschritte B) bis D) des erfindungsgemäßen Verfahrens in einer Prinzipskizze. Auf einen kompressiblen Kern 1, hier als aufblasbarer Schlauch ausgebildet, ist ein Geflecht 2 aus endlosen Verstärkungsfasern 3 und thermoplastischen Kunststofffasern 4 geflochten. Zur Vereinfachung der Darstellung sind die thermoplastischen Kunststofffasern 4 hier gewellt dargestellt. Das bedeutet nicht, dass die thermoplastischen Kunststofffasern 4 im erfindungsgemäßen Verfahren tatsächlich gewellt sind. Die gewellte Darstellung dient nur zur besseren Unterscheidbarkeit in der Zeichnung.

Der Kern 1 mit dem Geflecht 2 wird in ein längsteilbares Werkzeug 5 eingelegt. Das Werkzeug 5 ist durch hier nicht gezeigte an sich bekannte Mittel beheizbar. Nach Schließen des Werkzeugs 5 wird dieses derart beheizt, dass die thermoplastischen Kunststofffasern 4 zum Schmelzen gebracht werden. Der geschmolzene Kunststoff bildet nun eine Matrix, in die die Verstärkungsfasern 3 eingebettet werden. Durch aufbringen gezielten Druckes im Werkzeug 5 und gesteuerte Abkühlung des Werkzeugs 5 wird die Matrix zur Erstarrung gebracht. Die erstarrte Matrix ist hier nicht weiter dargestellt. Das fertig erstarrte Rohr aus erstarrter Kunststoffmatrix und Verstärkungsfasern 3 wird nach dem Öffnen des Werkzeugs 5 entnommen.

Der aufblasbare Kern 1 kann nun entleert und aus dem fertigen, durch aus dem erstarrten Rohr entfernt werden.

### Bezugszeichenliste

### (Teil der Beschreibung)

- 1: kompressibler Kern
- 2: Geflecht
- 3: endlose Verstärkungsfasern
- 4: thermoplastische Kunststofffasern
- 5: längsteilbares Werkzeug

## Patentansprüche

1. Verfahren zur Herstellung eines Ladeluftrohres aus Kunststoff, **dadurch gekennzeichnet, dass** das Verfahren folgende Arbeitsschritte aufweist, nämlich
A) Flechten einer Rohrkontur (2) auf einem Kern (1) unter Verwendung von Endlosfasern (3, 4), wobei mindestens ein Teil der Endlosfasern (4) aus thermoplastisch verformbaren Material besteht,
B) Einlegen des Fasergeflechtes (2) zusammen mit dem Kern (1) in ein beheizbares Formwerkzeug (5),
C) beheizen des Formwerkzeugs (5) derart, dass die thermoplastischen Endlosfasern (4) aufschmelzen,
D) Abkühlen des Formwerkzeugs (5) unter Aufbringung eines Druckes im Formwerkzeug (5),
E) Entnehmen des Bauteils (2, 3, 4) aus der Form (5) und Entfernung des Kerns (1).

2. Verfahren nach Anspruch 1, **dadurch gekennzeichnet, dass** der Kern (1) kompressibel ausgebildet ist.

3. Verfahren nach Anspruch 1 oder 2, **dadurch gekennzeichnet, dass** das Flechten durch eine automatische Rundflechtmaschine erfolgt.

4. Verfahren nach Anspruch 1, 2 oder 3, **dadurch gekennzeichnet, dass** die Endlosfasern (3, 4) als Hybridgarn (3, 4) ausgebildet sind.

5. Verfahren nach Anspruch 4, **dadurch gekennzeichnet, dass** das Hybridgarn (3, 4) anorganische Verstärkungsfasern (3) und thermoplastische Kunststofffasern (4) aufweist.

6. Verfahren nach Anspruch 5, **dadurch gekennzeichnet, dass** die anorganischen Verstärkungsfasern (3) als Glasfasern ausgebildet sind.

7. Verfahren nach Anspruch 4, **dadurch gekennzeichnet, dass** das Hybridgarn organische Verstärkungsfasern (3) und thermoplastische Kunststofffasern (4) aufweist.

8. Verfahren nach Anspruch 7, **dadurch gekennzeichnet, dass** die organischen Verstärkungsfasern (3) als Carbonfasern ausgebildet sind.

9. Verfahren nach Anspruch 5 oder 7, **dadurch gekennzeichnet, dass** die thermoplastischen Kunststofffasern (4) als Polypropylenfasern ausgebildet sind.

10. Verfahren nach Anspruch 5 oder 7, **dadurch gekennzeichnet, dass** die thermoplastischen Kunststofffasern (4) als Polyamidfasern ausgebildet sind .

11. Verfahren nach Anspruch 5 oder 7, **dadurch gekennzeichnet, dass** die thermoplastischen Kunststofffasern (4) als Polyesterfasern ausgebildet sind.

## Claims

1. Method of producing a charge air pipe from plastic, **characterized in that** the method has the following steps:
A) braiding a pipe outline (2) on a core (1) using continuous fibers (3, 4), where at least some of the continuous fibers (4) consist of thermoplastically formable material,
B) laying the fiber braid (2) together with the core (1) into a heatable mold (5),
C) heating the mold (5) such that the thermoplastic continuous fibers (4) melt,
D) cooling the mold (5) with application of a pressure in the mold (5),
E) removing the component (2, 3, 4) from the mold (5) and removing the core (1).

2. Method according to Claim 1, **characterized in that** the core (1) is compressible.

3. Method according to Claim 1 or 2, **characterized in that** the braiding is effected by means of an automatic circular braiding machine.

4. Method according to Claim 1, 2 or 3, **characterized in that** the continuous fibers (3, 4) take the form of a hybrid yarn (3, 4).

5. Method according to Claim 4, **characterized in that** the hybrid yarn (3, 4) includes inorganic reinforcing fibers (3) and thermoplastic fibers (4).

6. Method according to Claim 5, **characterized in that** the inorganic reinforcing fibers (3) take the form of glass fibers.

7. Method according to Claim 4, **characterized in that** the hybrid yarn includes organic reinforcing fibers (3) and thermoplastic fibers (4).

8. Method according to Claim 7, **characterized in that** the organic reinforcing fibers (3) take the form of carbon fibers.

9. Method according to Claim 5 or 7, **characterized in that** the thermoplastic fibers (4) take the form of polypropylene fibers.

10. Method according to Claim 5 or 7, **characterized in that** the thermoplastic fibers (4) take the form of polyamide fibers.

11. Method according to Claim 5 or 7, **characterized in that** the thermoplastic fibers (4) take the form of polyester fibers.

## Revendications

1. Procédé de fabrication d'un tuyau d'air de suralimentation en matière plastique, **caractérisé en ce que** le procédé présente les étapes de travail suivantes, à savoir
A) le tressage d'un contour de tuyau (2) sur un noyau (1) en utilisant des fibres continues (3, 4), au moins une partie des fibres continues (4) étant constituées d'un matériau thermoplastiquement déformable,
B) la mise en place de la tresse de fibres (2) conjointement avec le noyau (1) dans un outil de moulage (5) pouvant être chauffé,
C) le chauffage de l'outil de moulage (5) de telle sorte que les fibres continues thermoplastiques (4) fondent,
D) le refroidissement de l'outil de moulage (5) en appliquant une pression dans l'outil de moulage (5),
E) le retrait du composant (2, 3, 4) du moule (5) et l'enlèvement du noyau (1).

2. Procédé selon la revendication 1, **caractérisé en ce que** le noyau (1) est réalisé sous forme compressible.

3. Procédé selon la revendication 1 ou 2, **caractérisé en ce que** le tressage est effectué par une machine à tresser circulaire automatique.

4. Procédé selon la revendication 1, 2 ou 3, **caractérisé en ce que** les fibres continues (3, 4) sont réalisées sous forme de fil hybride (3, 4).

5. Procédé selon la revendication 4, **caractérisé en ce que** le fil hybride (3, 4) présente des fibres de renforcement inorganiques (3) et des fibres de matière plastique thermoplastiques (4).

6. Procédé selon la revendication 5, **caractérisé en ce que** les fibres de renforcement inorganiques (3) sont réalisées sous forme de fibres de verre.

7. Procédé selon la revendication 4, **caractérisé en ce que** le fil hybride présente des fibres de renforcement organiques (3) et des fibres de matière plastique thermoplastiques (4).

8. Procédé selon la revendication 7, **caractérisé en ce que** les fibres de renforcement organiques (3) sont réalisées sous forme de fibres de carbone.

9. Procédé selon la revendication 5 ou 7, **caractérisé en ce que** les fibres de matière plastique thermoplastiques (4) sont réalisées sous forme de fibres de polypropylène.

10. Procédé selon la revendication 5 ou 7, **caractérisé en ce que** les fibres de matière plastique thermoplastiques (4) sont réalisées sous forme de fibres de polyamide.

11. Procédé selon la revendication 5 ou 7, **caractérisé en ce que** les fibres de matière plastique thermoplastiques (4) sont réalisées sous forme de fibres de polyester.
